# EUROPÄISCHE PATENTSCHRIFT

(11) **EP 0 977 716 B1**
(45) Veröffentlichungstag und Bekanntmachung des Hinweises auf die Patenterteilung: **04.12.2002**
(21) Anmeldenummer: 98928209.0
(22) Anmeldetag: 20.04.1998
(51) Int. Cl.: C04B 24/02

(54) **VERWENDUNG VON ALKOHOLEN ALS ADDITIVE FÜR PUTZE UND/ODER MÖRTEL**
USE OF ALCOHOLS AS ADDITIVES FOR PLASTER AND/OR MORTAR
UTILISATION D'ALCOOLS COMME ADDITIFS POUR ENDUITS ET/OU MORTIERS

(30) Priorität: 29.04.1997 DE 19717936
(43) Veröffentlichungstag der Anmeldung: 09.02.2000
(73) Patentinhaber: Cognis Deutschland GmbH & Co. KG, 40589 Düsseldorf (DE)
(72) Erfinder: SCHULTE, Heinz-Günther, D-45481 Mülheim (DE); MOUSTAKAS, Sarantis, D-47799 Krefeld (DE); GRESS, Wolfgang, D-42111 Wuppertal (DE); NEUMANN, Ralf, D-42781 Haan (DE)
(86) Internationale Anmeldenummer: EP9802321
(87) Internationale Veröffentlichungsnummer: WO98049114

(56) Entgegenhaltungen:
- EP-A- 0 766 586
- WO-A-95/04008
- US-A- 5 176 752

## Beschreibung

### Gebiet der Erfindung

Die Erfindung betrifft die Verwendung von Alkoholen mit 8 bis 72 C-Atomen pro Molekül als Additive für Putze und/oder Mörtel. Die Alkohole liegen dabei in pulverförmiger Darreichungsform vor, wobei sie auf einen festen Träger aufgezogen sind. Durch diese Darreichungsform wird erreicht, daß - neben anderen günstigen Eigenschaften - insbesondere die Verarbeitungszeit (Offenzeit) der entsprechenden Mörtel verlängert wird.

### Stand der Technik

Als **Mörtel** (vergleiche zum Beispiel: Gerhard Stehno, "Baustoffe und Baustoffprüfung", Springer Verlag, Wien 1981, Seite 82) bezeichnet man in der Bautechnik Gemische aus Zuschlägen, Bindemitteln und Wasser, sowie gewünschtenfalls von Zusatzstoffen (Additiven).

Von den Mörteln zu unterscheiden sind die Putze. Als **Putze** bezeichnet man üblicherweise Gemische aus Zuschlägen und Bindmitteln sowie gegebenenfalls Zusatzstoffen (Additiven). Putze sind demnach weitgehend "trockene" Systeme. Durch Anrühren mit Wasser werden Putze in Mörtel überführt. In der handwerklichen Praxis werden die Putze üblicherweise erst vor der direkten Verwendung mit Wasser angerührt, also in Mörtel überführt.

Die genannten Bestandteile beziehungsweise Funktionskomponenten von Putzen und der daraus durch Zugabe von Wasser erhältlichen Mörtel sind wie folgt:

Bei den sogenannten **Zuschlägen** verwendet man im allgemeinen mineralische Zuschläge (Sande) mit einem Größtkorn von 4 mm. Aufgabe dieses Sandes ist es, im Mörtel ein mineralisches Gerüst auszubilden. Durch die Wahl des geeigneten Sandes läßt sich sowohl die Raumbeständigkeit als auch die Festigkeit des Mörtels günstig beeinflussen. In den meisten Fällen verwendet man Natursand, aber auch der Einsatz von Brechsanden ist möglich.

**Bindemittel** werden entsprechend der gewünschten Verarbeitbarkeit und den geforderten Eigenschaften des erhärteten Mörtels gewählt. Durch das Anmachen des Bindemittels mit Wasser sollen die einzelnen Zuschlagkörner umhüllt und miteinander verkittet werden. Generell werden zwei Typen von Bindemitteln eingesetzt. Dabei handelt es sich zum einen um mineralische Bindemittel. Hierbei unterscheidet man lufthärtende Bindemittel, bei denen die Härtung nach Wasserzugabe ausschließlich an der Luft erfolgt und hydraulische Bindemittel, bei denen die Erhärtung nach Wasserzugabe sowohl an der Luft als auch an Wasser erfolgen kann. Nach der Art der mineralischen Bindemittel werden Gipsmörtel, Gipskalkmörtel, Anhydridmörtel, Anhydridkalkmörtel, Putz- und Mauerbindemörtel, Zementmörtel und Magnesiamörtel unterschieden. Neben den genannten mineralischen Bindemitteln verwendet man auch organische Bindemittel. In diesem Fall spricht man auch von Kunstharzmörteln.

Durch Hinzunahme von **Zusatzstoffen (Additiven)** lassen sich bestimmte Mörteleigenschaften wie beispielsweise Wasserundurchlässigkeit, besonders gute Haftung, Bearbeitbarkeit, Farbe usw. beeinflussen bzw. verbessern.

Es gibt verschiedene Möglichkeiten, nach denen Mörtel klassifiziert werden können. Typischerweise werden die Mörtel eingeteilt nach
a) der Bindemittelart (z.B. Zementmörtel, Kalkmörtel, Kalkzementmörtel, Gipsmörtel usw.), nach
b) der Art der Verwendung (beispielsweise Mauermörtel, Putzmörtel, Einpressmörtel, Fugenmörtel, Estrichmörtel, usw.) und nach
c) dem Erhärtungsvorgang (beispielsweise nichthydraulische Mörtel oder hydraulische Mörtel).

Im Hinblick auf **Putzmörtel** gilt folgendes: Putze werden an Wänden und Decken je nach Erfordernis ein- oder mehrlagig aufgetragen. Außer der ästhetischen Gestaltung der Oberfläche dienen sie als Außenputze der Abhaltung der Witterungseinflüsse und als Innenputze der ebenflächigen Unterlage von Anstrichen und Tapeten; bei Stahlbetondecken und -treppen sowie bei Stahlstützen auch dem Feuerschutz der Stahleinlagen sowie bei Verwendung poriger Zuschläge dem Wärmeschutz. Innen- und Außenputze sollten grundsätzlich atmungsaktiv sein, also einen Feuchtigkeitsaustausch durch Dampfdiffusion zwischen den verputzten Bauteilen und der Luft zulassen. Für Putze mit mineralischen Bindemitteln werden Putzmörtel und für Putze mit organischen Bindemitteln Beschichtungsstoffe (Kunstharzputze) verwendet. Beide können auch im Verbund als Putzsystem wirken. Beschichtungsstoffe für die Herstellung von Kunstharzputzen bestehen oft aus organischen Bindemitteln in Form von Dispersionen oder Lösungen und Füllstoffen mit überwiegendem Kornanteil oberhalb von 0,25 mm. Sie werden üblicherweise verarbeitungsfähig geliefert.

Ein generelles Problem bei den Putzmörteln ist es, daß sie im Rahmen ihrer Verarbeitung einem vorzeitigen Austrocknen unterliegen. Gegen ein solches vorzeitiges Austrocknen (mit der Folge von Rißbildungen etc.) durch beispielsweise Luftzug und/oder Sonnenbestrahlung wird in der Fachliteratur üblicherweise vorgeschlagen, Putze durch geeignete Maßnahmen zu schützen. Hierzu gehören das Besprühen mit Wasser, Sonnenblenden bei Außenputzen, Verschließen der Fensteröffnungen bei Innenputzen, jedoch Belüftungsmöglichkeit zum Abdunsten der Feuchtigkeit (vergleiche: Siegfried Härig, Karl Günther, Dietmar Klausen, "Technologie der Baustoffe - Handbuch für Studium und Praxis", Verlag C.F. Müller, Karlsruhe 1990, Seite 114).

In jüngerer Zeit hat die Bedeutung der sogenannten **Dispersionsputze.** die redispergierbare Polymerisatpulver als Bindemittel enthalten, zugenommen. Die Bezeichnung "Dispersionsputze" stammt daher, daß zur Herstellung der entsprechenden Bindemittel von wäßrigen Polymerdispersionen ausgegangen wurde, die - beispielsweise durch Sprühtrocknung - in einen trockenen Zustand überführt wurden. Wird ein Putz, der ein solches Bindemittel enthält, mit Wasser in Kontakt gebracht, so werden die Polymerisate redispergiert, das heißt der so erhaltene Mörtel enthält nun Polymerisate als Bindemittel.

Der wachsende Erfolg der Dispersionsputze ist unter anderem auf Vorteile wie bessere Haftung und Elastizität sowie den wasserabweisenden Charakter zurückzuführen. Bei der Verarbeitung größerer Flächen ist allerdings die Verarbeitungszeit der Dispersionsputze - wie bereits oben für Putzmörtel allgemein beschrieben - ein kritischer Faktor. Nach dem Antrocknen, verbunden mit dem Koaleszieren der Kunststoffdispersionen, ist nämlich eine erste Stufe der Wasserfestigkeit erreicht, und der Putz läßt sich nicht mehr ohne weiteres mit Wasser ablösen. Die Folge davon sind sichtbare Ansatzstellen. Das Problem ist dabei umso größer, je stärker strukturiert der Putz ist (Reibeputze, Strukturputze).

**US 3 486 916** beschreibt Zement-Mischungen mit einer verzögerten Rate der Freisetzung von freiem Wasser. Diese Mischungen wurden erhalten durch Zumischen einer wäßrigen Emulsion von C₁₄₋₂₀-Fettalkoholen, die einen die Wasserverdunstung inhibierenden Film auf der Oberfläche der gegossenen Gegenstände bilden.

**WO 95/04008** beschreibt einen trockenen Zement mit verringerter Neigung zur Auswitterung von Kalk, wobei der hydraulische Zement 0,01 bis 3 Gew.-% von wenigstens einem C₁₄₋₂₂-Fettalkohol enthält.

**SU 950 703** (zitiert nach: Derwent-Abstract: 63154 K/26) beschreibt Mischungen verschiedener Fettalkohole, Kohlenwasserstoffe, Seifen und Fettsäureester. Derartige Mischungen werden verwendet um die Oberfläche von frisch verlegtem Beton im Hinblick auf einen zu raschen Wasserverlust zu schützen.

**SU 652 154** (zitiert nach: Derwent-Abstract: 88793 B/49) beschreibt die Herstellung von Formkörpern aus Beton. Dabei wird frisch verlegter Beton mit einer verdünnten wäßrigen Lösung von Cetylalkohol beschichtet. Dadurch soll die Rate der verdunstungsbedingten Wasserverluste um einen Faktor 4 - 5 geringer werden. Die Fettalkoholschicht wird anschließend entfernt.

**DE-A-44 34 010** beschreibt redispergierbare Polymerisatpulver, die Amino-striacin-Formaldehyd-Sulfit-Kondensationsprodukte als wirksame Schutzkolloide enthalten, die bei der Sprühtrocknung der entsprechenden Polymerdispersionen von Bedeutung sind. Gemäß Seite 3, Zeilen 7 ff enthalten die redispergierbaren Polymerisatpulver als Hauptkomponente Polymerisate auf Vinyl- oder Acrylbasis. Als Beispiele für geeignete Polymerisate werden genannt: Produkte aus Vinylacetat, Vinylpropionat, Vinyllaurat, Vinylchlorid, Vinylidenchlorid, geradkettigen oder verzweigten Vinylestern mit 3 bis 18 C-Atomen (Versatate), Acryl- und Methacrylmonomeren, insbesondere Estern, sowie Styrol und Ethen, die in Form ihrer Homo-, Co-, Terpolymerisate sowie als Pfropfpolymerisate vorliegen können.

**DE-A-44 21 270** beschreibt wäßrige Fettalkoholdispersionen, die C₁₀₋₂₈-Fettalkohole, anionische grenzflächenaktive Verbindungen und nichtionische grenzflächenaktive Verbindungen enthalten. Derartige wäßrige Fettalkoholdispersionen sind als Antischaummittel und als Additive für dispersionsgebundene Putze geeignet. Auf Seite 5, Zeilen 14 bis 20 wird ausgeführt, daß diese wäßrigen Fettalkoholdispersionen die Verarbeitungszeit dispersionsgebundener Putze verlängern. Darüber hinaus wird bei Verwendung dieser Dispersionen die Neigung zur Rißbildung der dispersionsgebundenen Putze deutlich verringert. Eine Verringerung der Wasseraufnahme und damit eine Steigerung der hydrophobierenden Wirkung der Putze sind weitere Vorteile. Schließlich ergeben sich auch eine gute Überstreichbarkeit der Putze sowie eine gute Wasserdampfdurchlässigkeit. Die DE-A-44 21 270 offenbart jedoch ausschließlich wäßrige Dispersionen mit einem Gehalt von unter anderem Fettalkoholen zur Verlängerung der Verarbeitungszeit dispersionsgebundener Putze. Demnach offenbart DE-A-22 21 270 Fettalkohole in Dispersionsform als Offenzeitverlängerer für Dispersionsputze, die als wäßrige Pasten angeboten werden.

### Beschreibung der Erfindung

Aufgabe der vorliegenden Erfindung war es, Additive fiir Putze und/oder Mörtel zu entwickeln, die bewirken, daß die diese Additive enthaltenden Mörtel, die entweder
- durch Anrühren der die Additive enthaltenden vorgefertigten Putze mit Wasser oder
- durch Anrühren der Einzelkomponenten (Zuschläge, Bindemittel und Additive) mit Wasser
erhältlich sind, sich durch eine Verlängerung der Verarbeitungszeit (Offenzeit) auszeichnen.

Diese Aufgabe wurde gelöst durch spezielle Zusatzstoffen (Additive). Bei diesen Additiven handelt es sich um Alkohole in pulverförmiger Darreichungsform, wobei die Alkohole auf einen festen Träger aufgezogen sind und wobei die Alkohole 8 bis 72 C-Atome pro Molekül enthalten und verzweigt oder unverzweigt, gesättigt oder ungesättigt sein können. Die Träger werden ausgewählt aus der Gruppe der Kieselsäuren, Kieselgele, Aluminiumoxide, Aluminium-Silikate, Kaolin, Kreide, Mikrotalg, Bariumsulfat, Titanweiß und Zeolithe.

Unter dem Begriff der "Alkohole" werden dabei im Rahmen der vorliegenden Erfindung sowohl einzelne Alkohole definierter Kettenlänge, als auch Mischungen beliebiger Alkohole des genannten C-Ketten-Bereiches verstanden.

Unter dem Begriff "pulverförmig" wird im Rahmen der vorliegenden Erfindung verstanden, daß die Darreichungsform der Alkohole, also die mit den Alkoholen beschichteten festen Träger, in schütt- beziehungsweise rieselflähiger Pulverform vorliegt. Dabei ist unerheblich, ob beim Anfühlen eines solchen Pulvers subjektiv ein mehr oder minder leichtes Feuchtigkeitsgefühl empfunden wird oder nicht.

Die erfindungsgemäßen Additive bieten folgende Vorteile: Die Antrocknungszeit des Mörtelsystems wird verlängert. Hierdurch wird eine Strukturierung bei Reibeputzen auch nach längerer Trocknungszeit möglich und Unterschiede in den Putzstrukturen, abgerieben bei unterschiedlichen Zeiten, werden minimiert. Darüber hinaus wird bei Verwendung der erfindungsgemäßen Additive nicht wie mit anderen marktüblichen Hydrophobierungsmitteln ein sogenannter "Abperleffekt" erzielt. Die Additive sind jedoch in der Lage, die Zeit zu erhöhen, die von außen kommendes Wasser zum Eindringen benötigt. Es wurde ferner festgestellt, daß der Einsatz der erfindungsgemäßen Additive keine Haftungsprobleme bei Überbeschichtungen verursacht. Schließlich mindern die erfindungsgemäßen Additive deutlich die Neigung zur Rißbildung. Ein weiterer Vorteil beim Einsatz der erfindugsgemäßen Additive besteht darin, daß mit diesen Additiven angesetzte Putzsysteme geschmeidig sind und sich mit wenig Kraftaufwand aufbringen und verreiben lassen.

Nachteile wie beschleunigte Zementreaktion bzw. verschlechterte Beständigkeit (Frühwasser, UV, etc.) konnten nicht festgestellt werden.

Gegenstand der Erfindung ist in einer ersten Ausführungsform die Verwendung von Alkoholen als Zusatzstoffe (Additive) für Putze und/oder Mörtel. Dabei liegen die Additive in pulverförmiger Darreichungsform vor, wobei die Alkohole auf einen festen Träger aufgezogen sind. Die Kettenlänge der Alkohole liegt im Bereich von 8 bis 72 C-Atomen pro Molekül. Wie bereits gesagt können die Alkohole gesättigt oder ungesättigt, geradkettig oder verzweigt sein. Sie können darüber hinaus als einzelne individuelle Species oder in beliebiger Mischung untereinander eingesetzt werden.

Hinsichtlich der Auswahl des **festen Trägers** gilt das oben Gesagte. Die erfindungsgemäß einzusetzenden festen Träger sind in der Lage, eine wäßrige Alkoholdispersion optimal aufzunehmen, so daß einerseits das darin enthaltene Wasser weitgehend im Inneren gebunden wird und auf diese Weise nach außen eine weitgehende Trockenheit bewirkt wird, andererseits die Alkohole an der Oberfläche und/oder in Oberflächen-nahen Bereichen adsorbiert werden. In bevorzugten Ausführungsformen soll der feste Träger dementsprechend porös sein und insbesondere eine mittlere bis gute **Porosität** aufweisen. Unter Porosität ist dabei - üblichem Sprachgebrauch folgend - die Eigenschaft des festen Trägers zu verstehen, mit Poren versehen zu sein. Poröse Stoffe werden häufig durch das sogenannte Porenvolumen gekennzeichnet. In dieser Hinsicht ist die Wahl eines bestimmten Porenvolumens fiir poröse feste Träger an sich nicht kritisch. Es können dementsprechend sowohl Träger mit Grobporen, als auch mit Feinporen (Makro-, Meso- bzw. Mikroporen) eingesetzt werden.

Durch den Einsatz poröser Materialien als Träger wird eine Erhöhung der Oberfläche der Teilchen des festen Trägers bewirkt und - im Zusammenhang damit - eine gute Adsorbtionsfähigkeit für die erfindungsgemäß einzusetzenden Alkohole.

Bei den erfindungsgemäß einzusetzenden Trägern handelt es sich wie schon gesagt um Kieselsäuren, Kieselgele (Synonyme Bezeichnungen sind: Kieselsäuregele und Silicagele; molekular sind Kieselgele kolloidale oder ungeformte Kieselsäure von elastischer bis fester Konsistenz mit lockerer bis dichter Porenstruktur - Kieselsäure liegt dabei in Form hochkondensierter Polykieselsäuren vor), Aluminiumoxide, Aluminium-Silikate, Kaolin, Kreide, Mikrotalg, Bariumsulfat, Titanweiß, Zeolithe und dergleichen. Im Rahmen der vorliegenden Erfindung sind als Träger Kieselsäuren, insbesondere Fällungskieselsäuren, besonders bevorzugt.

Die Alkohole können an sich auf verschiedene Weise auf die festen Träger aufgebracht werden. Beispielsweise können die Alkohole auf den festen Träger in flüssiger bzw. aufgeschmolzener Form aufgebracht werden oder auf den Träger aufgesprüht werden. Sie können aber auch in Form einer wäßrigen Dispersion appliziert werden. Die letztgenannte Herstellung der pulverförmigen Darreichungsform der Alkohole ist im Rahmen der vorliegenden Erfindung bevorzugt und wird weiter unten beschrieben. Der Vorteil hierbei ist, daß beim Einsatz von Trägern mittlerer bis guter Porosität, d.h. von Trägern mit erhöhter Oberfläche, zum einen wesentlich mehr Alkohol an den Oberflächen bzw. in Oberflächen-nahen Bereichen adsorbiert werden kann, zum anderen jedoch das aus der Alkoholdispersion stammende Wasser vom Träger gut gebunden werden kann.

Die zur Herstellung der erfindungsgemäßen Additive einzusetzenden festen Träger sind pulverförmige, schütt- bzw. rieselförmige Materialien. Die Teilchengröße des Trägers ist dabei an sich nicht kritisch. Im Rahmen der Anwendung in Mörteln ist es jedoch bevorzugt, daß mindestens 80 % der Teilchen kleiner als 1 mm im Durchmesser sind. Vorzugsweise beträgt der Durchmesser von mindestens 80 % der Teilchen weniger als 1 mm, wobei die restlichen Teilchen im wesentlichen einen mittleren Teilchendurchmesser im Bereich von 1 bis 3 mm aufweisen. Die Morphologie bzw. Form der Teilchen spielt dabei keine wesentliche Rolle. Die Teilchen können sowohl kugelförmig, stäbchenförmig, als auch amorph sein. Die Bestimmung der Korngrößenverteilung kann auf einfache Weise dadurch geschehen, daß man eine abgewogene Menge eines pulverförmigen festen Trägers durch ein Sieb mit einer definierten Maschenweite (z.B. 1 oder 3 mm) schüttelt und dem Anteil des vom Sieb zurückgehaltenen Materials durch Differenzwägung bestimmt.

Die in den erfindungsgemäßen Additiven enthaltenen **Alkohole** können wie bereits gesagt als einzelne Species oder im Gemisch vorliegen. Die Alkohole können gesättigt oder ungesättigt, geradkettig oder verzweigt sein. Beispiele für besonders geeignete Klassen von Alkoholen sind Fettalkohole natürlichen Ursprungs, die 8 bis 24 C-Atome pro Molekül enthalten, ferner Derivate von Fettalkoholen wie Guerbetalkohole und Dimer- und/oder Trimeralkohole und schließlich Oxoalkohole.

In einer bevorzugten Ausführungsform der vorliegenden Erfindung werden **Fettalkohole** eingesetzt, vorzugsweise Mischungen von Fettalkoholen natürlichen Ursprungs. Diese Mischungen können gesättigte und/oder ungesättigte Fettalkohole enthalten. Beispiele für geeignete Fettalkohole sind Caprylalkohol, Pelargonalkohol, Caprinalkohol, Undecanol-1, Laurylalkohol, Tridecanal-1, Myristinalkohol, Pentadecanol-1, Palmitoleylalkohol, Heptadecanol-1, Stearylalkohol, Nonadecanol-1, Arachidylalkohol, Heneicosanol-1, Behenylalkohol, Tricosanol-1, Lignocerylalkohol, Oleylalkohol, Elaidylalkohol, Ricinolalkohol, Linolelyalkohol, Linolenylalkohol, Gadoleylalkohol, Arachidonalalkohol, Erucaalkohol und Brassidylalkohol.

In einer weiteren Ausführungsform setzt man **Guerbetalkohole** ein. Bei den Guerbetalkoholen handelt es sich um Verbindungen der allgemeinen Formel (I)

R¹-CH(CH₂OH)-R² (I)

worin die Reste R¹ und R² unabhängig voneinander eine Alkylgruppe mit 6 bis 12 C-Atomen bedeuten, mit der Maßgabe, daß die Gesamtzahl der C-Atome pro Molekül im Bereich von 16 bis 24 liegt. Die Herstellung der Guerbetalkohole (I) erfolgt nach an sich bekannten Syntheseverfahren der organischen Chemie. Sie sind darüber hinaus vielfach kommerziell erhältlich.

In einer weiteren Ausführungsform setzt man **Dimer- und/oder Trimeralkohole** ein. Unter Dimer- bzw. Trimertriolen sind Alkohole zu verstehen, die sich von sogenannten Dimerfettsäuren bzw. Trimerfettsäuren durch den Ersatz der COOH-Funktion durch eine OH-Funktion ableiten. Unter Dimerfettsäuren sind dabei - wie in der Fachwelt üblich - solche Carbonsäuren zu verstehen, die durch Oligomerisierung ungesättigter Carbonsäuren, in der Regel Fettsäuregemische wie Ölsäure, Linolsäure, Erucasäure und dergleichen, zugänglich sind. Üblicherweise erfolgt die Oligomerisierung bei erhöhter Temperatur in Gegenwart eines Katalysators aus beispielsweise Tonerde. Die dabei erhaltenen Produkte stellen Gemische verschiedener Substanzen dar, wobei die Dimerisierungsprodukte überwiegen. Jedoch sind auch gewisse Anteile höherer Oligomerer, insbesondere die Trimerfettsäuren, enthalten. Daneben enthalten die Trimerfettsäuren herstellungsbedingt auch Monomere oder monofunktionelle Carbonsäuren.

Dimerfettsäuren sind handelsübliche Produkte und werden in verschiedenen Zusammensetzungen und Qualitäten angeboten. Im Rahmen der vorliegenden Erfindung sind Dimerdiole bevorzugt, die aus solchen Dimerfettsäuren stammen, die einen Dimergehalt von mindestens 50 %, vorzugsweise mindestens 75 % aufweisen und bei denen die Zahl der C-Atome pro Dimermolekül überwiegend im Bereich von 36 bis 44 liegt. Analog den Dimerfettsäuren sind auch die Trimerfettsäuren Oligomerisierungsprodukte ungesättigter Fettsäuren, wobei jedoch der Anteil an Trimeren im Produkt überwiegt. Auch Trimerfettsäuren sind handelsübliche Produkte. Dimerdiole bzw. Trimertriole, die mögliche erfindungsgemäß einsetzbare Alkohole darstellen, können beispielsweise durch Hydrierung von Dimer- bzw. Trimerfettsäuren gewonnen werden. Üblicherweise erfolgt eine Hydrierung in Gegenwart von kupfer- und/oder zinkhaltiger Katalysatoren in üblichen kontinuierlich arbeitenden Druckhydrierapparaturen mit Gaskreislauf.

In einer weiteren Ausführungsform setzt man **Oxoalkohole** ein. Bei den Oxoalkoholen handelt es sich um synthetisch hergestellte Alkohole. Diese bei der sogenannten Oxo-Synthese gewonnenen Alkohole sind meist primär und verzweigt. Beispiele für handelsübliche Oxoalkohole sind Isooctyl-, Isononyl-, Isodecyl- und Isotridecylalkohol.

Die Herstellung der pulverförmigen Darreichungsform der Alkohole geschieht in vorzugsweise dadurch, daß man einen festen - und vorzugsweise porösen - Träger mit einer wäßrigen Dispersion der Alkohole in Kontakt bringt und in für die Pulverherstellung üblichen Geräten mischt.

Ein weiterer Gegenstand dieser Erfindung ist dementsprechend ein Verfahren zur Herstellung von Alkoholen in pulverförmiger Darreichungsform, das dadurch charakterisiert ist, daß man einen festen Träger der ausgewählt ist aus der oben genannten Gruppe mit einer wäßrigen Dispersion von Alkoholen mit 8 bis 72 C-Atomen pro Molekül in Kontakt bringt und in für die Pulverherstelllung üblichen Geräten, beispielsweise einem Lödige-Mischer mischt. Dabei setzt man vorzugsweise wäßrige Alkoholdispersionen ein, die einen Alkoholgehalt im Bereich von 5 bis 50 Gew.-% - bezogen auf die gesamte Dispersion - aufweisen. Besonders bevorzugt ist dabei ein Bereich von 15 bis 35 Gew.-%. Das Gewichtsverhältnis Alkoholdispersion/Träger wird vorzugsweise im Bereich von 20 : 80 bis 80 : 20 eingestellt. Dabei ist ein Gewichtsverhältnis Alkoholdispersion/Träger von etwa 70 : 30 ganz besonders bevorzugt.

Die erfindungsgemäßen Additive können einerseits mit Zuschlägen und Bindemitteln zu gebrauchsfertigen Putzen gemischt werden, die dann unmittelbar vor der Anwendung durch Anrühren mit Wasser in den entsprechenden Mörtel überführt werden. Die Additive können andererseits getrennt gelagert werden und erst unmittellbar beim Anrühren der Mörtel zum Einsatz kommen.

Aus praktischen Gründen kommt dabei der erstgenannten Variante die größere Bedeutung zu. Zur Herstellung von Mörteln aus solchen die erfindungsgemäßen Additive enthaltenden Putzen rührt man die Putze mit Wasser an und läßt anschließend einige Minuten reifen.

Ein weiterer Gegenstand der Erfindung sind dementsprechend **Putze** enthaltend Zuschläge, Bindemittel und Zusatzstoffe (Additive), die dadurch charakterisiert sind, daß es sich bei den Additiven um Alkohole in pulverförmiger Darreichungsform handelt, wobei die Alkohole auf einen festen Träger der ausgewählt ist aus der oben genannten Gruppe aufgezogen sind und wobei die Alkohole 8 bis 72 C-Atome pro Molekül enthalten und ferner **Mörtel**, die durch Anrühren der Putze mit Wasser erhältlich sind.

In einer bevorzugten Ausführungsform enthalten dabei die Putze die erfindungsgemäßen Additive in Mengen von 0,01 bis 10 Gew.-% - bezogen auf den gesamten Putz. Besonders bevorzugt ist dabei der Bereich von 0,3 bis 2 Gew.-%.

Im Hinblick auf die Zuschläge und Bindemittel der erfindungsgemäßen Putze bzw. Mörtel gelten keinerlei einschränkende Bedingungen. Hier sind also alle üblichen und dem Fachmann bekannten Materialien einsetzbar. Exemplarische Beispiele hierfür können dem einleitenden Teil der Beschreibung im Kapitel "Stand der Technik" entnommen werden. Darüber hinaus ist es möglich, den Putzen bzw. Mörteln gewünschtenfalls neben den erfindungsgemäßen Additiven weitere übliche Additive (Zusatzstoffe) zuzugeben.

Die folgenden Beispiele dienen der Erläuterung der Erfindung und sind nicht einschränkend zu verstehen.

### Beispiele

### 1. Herstellung eines erfindungsgemäßen Additivs

Eine wäßrige Dispersion eines Gemisches natürlicher Fettalkohole ("Loxanol 842 DP/6"; C-Ketten-Bereich: 14-20 ; Konzentration der Fettalkohole in der Dispersion: 20 Gew.-%; Handelsprodukt der Henkel KGaA/Düsseldorf) wurde mit Kieselsäure ("Sipernat 22 S"; feinteilige, sprühgetrocknete und vermahlene Kieselsäure; Hersteller: Firma Degussa AG/Frankfurt am Main) im Gewichtsverhältnis von 70 : 30 in einem laborüblichen Mischgerät zur Pulverherstellung (Multi-Mix, Typ MX 31) vermischt. Dazu wurde zunächst die Kieselsäure vorgelegt und anschließend unter Rühren auf kleinster Stufe die wäßrige Dispersion des Gemisches natürlicher Fettalkohole zugegeben und schließlich für einen Zeitraum von ca. 20 bis 30 Sekunden intensiv (mittlere Rührstufe) gerührt. Das auf diese Weise erhaltene Additiv wird im folgenden mit A-1 bezeichnet.

Auf analoge Weise wurden auch andere Kieselsäuren als Trägersubstanz eingesetzt. Das mit Kieselsäure FK 310 hergestellte Additiv wird als A-2 bezeichnet. Das mit Kieselsäure FK 320 hergestellte Additiv wird als A-3 bezeichnet. Das mit Sipernat 50 hergestellte Additiv wird als A-4 bezeichnet. Das mit Sipernat 50 S hergestellte Additiv wird als A-5 bezeichnet.

Einzelheiten zu den im letzten Absatz genannten Kieselsäuren sind gemäß der Firmenschrift "Fällungskieselsäuren und Silikate - Herstellung, Eigenschaften und Anwendungen"; Degussa AG, Frankfurt am Main, Deutschland: Kieselsäure FK 310: Sehr feinteilige Kieselsäure mit einer BET-Oberfläche von 650 m²/g; Kieselsäure FK 320:.Kieselsäure; Sipernat 50: Sprühgetrocknete Trägerkieselsäure mit besonders hoher Saugfähigkeit; Sipernat 50 S: Durch Vermahlen von Sipernat 50 gewonnen und dadurch von höherer Feinteiligkeit.

### 2. Rezeptur eines Organo-Silikat-Pulverputzes

In der nachstehenden Tabelle wird beispielhaft eine Formulierung enthaltend einen erfindungsgemäßen Offenzeitverlängerer (Additiv A-1) gegeben. Auf Basis und in Anlehnung an diese Rezeptur wurden mehrere anwendungstechnische Untersuchungen durchgeführt (vergleiche dazu Punkt 3).

| Komponente | Gewichtsteile | Funktion | Hersteller |
|---|---|---|---|
| Portil K | 5,40 | Wasserglas | Henkel KGaA |
| HYDROPALAT 760 | 0,30 | Netz-(Fließhilfsmittel) | Henkel KGaA |
| Mowilith LDM 2072 P | 4,20 | Dispersion | Hoechst AG |
| TEXAPON K12-96 | 0,12 | Luftporenbildner | Henkel KGaA |
| Zilosil 16 | 1,20 | Filmbildehilfsmittel | Omya GmbH |
| Tylose H 15000 YP2 | 0,25 | Verdickungsmittel | Hoechst AG |
| FOAMASTER PD-1 | 0,70 | Pulverentschäumer | Henkel KGaA |
| Arbocel B 400 c | 1,20 | Faser | Rettenmeier & Söhne |
| Bayertitan RFDI | 7,00 | Pigment | Bayer AG |
| Omyacarb 10 GU | 7,00 | Füllstoff | Omya GmbH |
| Omyacarb 40 GU | 13,10 | Füllstoff | Omya GmbH |
| Omyacarb 130 GU | 8,38 | Füllstoff | Omya GmbH |
| Aluminiumoxid PS-6 | 1,00 | Füllstoff | Martinswerk |
| Plastorit Naintsch 0.5 | 4,00 | Füllstoff | Naintsch Mineralwerke |
| Calcilit 1.8 - 2.5 KA | 45,15 | Füllstoff | Alpha Calcit Füllstoffe |
| **Additiv A-1** | **1,00** | **Offenzeitverlängerer** | |
| Zu den Herstellern: Henkel KGaA (Düsseldorf, Deutschland), Hoechst AG (Frankfurt, Deutschland), Omya GmbH (Köln, Deutschland), Rettenmeier & Söhne (Ellwangen, Deutschland), Bayer AG (Leverkusen, Deutschland), Martinswerk (Bergheim, Deutschland), Naintsch Mineralwerk GmbH (Graz, Österreich), Alpha Calcit Füllstoffe (Köln, Deutschland). | | | |

### 3. Anwendungstechnische Prüfungen

### 3.1. Offenzeit

Der unter Nr. 2 beschriebene Organo-Silikat-Pulverputz wurde mit Wasser zu einem Mörtel angerührt. Dabei wurden 100 Gewichtsteile der genannten Rezeptur mit 23 Gewichtststeilen Anmachwasser versetzt und der Mörtel nach dem Anrühren 5 Minuten reifen gelassen. Anschließend wurde der Mörtel mit einer definierten Schichtdicke auf einer Glasplatte aufgetragen. Nun wurde eine Nadel (Material der Nadel: Edelstahl, Länge: 20 mm; Durchmesser: 1 mm) in das nasse Beschichtungsmaterial eingetaucht. Anschließend wurde die Kraft gemessen, die die Nadel benötigte, um mit einer definierten Geschwindigkeit (21,8 cm/h) durch den nassen Film zu fahren. Die Meßwerte wurde auf einem Schreiber registriert.

Diese Methode basiert auf dem Prinzip, daß in der (zeitlich) ersten Phase nach dem Auftragen des Mörtels auf der Glasplatte eine geringere Kraft benötigt und demzufolge auch registriert wird; sobald jedoch die Trockenzeit beginnt, nimmt die benötigte Kraft deutlich zu. Die entsprechenden Messpunkte korrelieren exakt mit der Offenzeit des verwendeten Mörtels.

Für den - wie gerade beschrieben - auf Basis der unter Nr. 2 beschriebenen Rezeptur hergestellten Mörtel (der Organo-Silikat-Pulverputz enthielt wie beschrieben 1,0 Gewichtsteile des erfindungsgemäßen Additivs A-1) wurde eine Offenzeit von 27 Minuten gemessen. Im Vergleich dazu zeigte ein Mörtel, der ebenfalls auf Basis der unter Nr. 2 beschriebenen Organo-Silikat-Pulverputz-Rezeptur - jedoch ohne einen Gehalt an einem erfindungsgemäßen Additiv - hergestellt war, lediglich eine Offenzeit von 12 Minuten. Durch Erhöhung des Anteils des erfindungsgemäßen Additivs A-1 in der genannten Pulverputz-Rezeptur wurde die Offenzeit sogar auf 32 Minuten verlängert.

### 3.2. Rißbildung

Der Mörtel auf Basis des Organo-Silikat-Pulverputzes mit einem Gehalt von 1,0 Gew.-% des Additivs A-1 (sowie auch ein entsprechender Mörtel mit halbiertem Gehalt an dem erfindungsgemäßen Additiv A-1) zeigte nach Verarbeitung keinerlei Rißbildung. Der entsprechende Mörtel ohne Zusatz des erfindungsgemäßen Additivs A-1 zeigte demgegenüber eine leichte, jedoch deutlich erkennbare Rißbildung.

### 3.3. Hydrophobierung

Auf dem Anstrichfilm wurde mittels einer Pipette mit Methylenblau angefärbtes Wasser getropft. Anschließend wurde die Zeit gemessen, die das Wasser benötigte, um in den Film einzudringen. Bei der Probe, die auf Basis des Mörtels, der kein erfindungsgemäßes Additiv A-1 enthielt, hergestellt worden war, wurde ein direktes Eindringen des Wasser in den Film beobachtet. Dabei drang das Wasser bis zum Untergrund, d.h. bis zur Glasplatte ein. Dagegen wurde bei den Proben, die auf Basis der Rezeptur mit einem Gehalt an dem erfindungsgemäßen Additiv A-1 hergestellt worden war, ein Spreiten des Wasser auf der Filmoberfläche beobachtet; dementsprechend war die Eindringzeit erhöht und die Eindringtiefe reduziert. Die Eindringzeit betrug bei der A-1-freien Probe 5 Sekunden, bei A-1-haltigen Proben lag sie - abhängig von der Konzentration des Additivs A-1 - im Bereich von 60 bis 135 Sekunden; der entsprechende Konzentrationsbereich des Additivs A-1 in den dem Mörtel zugrunde liegenden Organo-Silikat-Pulverputz lag dabei im Bereich von 0,5 bis 2,0 Gew.-%.

### 3.4. Sonstiges

Die unter 3.1 bis 3.3 geschilderten Vorteile beim Einsatz des erfindungsgemäßen Additivs A-1 wurden auch beim Einsatz der erfindugsgemäßen Additive A-2 bis A-5 beobachtet.

## Patentansprüche

1. Verwendung von Alkoholen als Zusatzstoffe (Additive) für Putze und/oder Mörtel, **dadurch gekennzeichnet, daß** die Additive in pulverförmiger Darreichungsform vorliegen, wobei die Alkohole auf einen festen Träger aufgezogen sind und 8 bis 72 C-Atome pro Molekül enthalten und wobei man die Träger auswählt aus der Gruppe der Kieselsäuren, Kieselgele, Aluminiumoxide, Aluminium-Silikate, Kaolin, Kreide, Mikrotalg, Bariumsulfat, Titanweiß und Zeolithe.

2. Verwendung nach Anspruch 1, wobei der Träger Kieselsäure ist.

3. Verwendung nach Anspruch 1 oder 2, wobei der Träger Fällungs-Kieselsäure ist.

4. Verwendung nach einem der Ansprüche 1 bis 3, wobei die Alkohole ausgewählt sind aus der Gruppe der Fettalkohole mit 8 bis 24 C-Atomen pro Molekül, der Guerbetalkohole mit 16 bis 24 C-Atomen pro Molekül, der Dimer- und/oder Trimeralkohole und der Oxoalkohole.

5. Verwendung nach einem der Ansprüche 1 bis 4, wobei bei der Herstellung der Additive der feste Träger mit einer wäßrigen Dispersion von Alkoholen mit 8 bis 72 C-Atomen pro Molekül in Kontakt gebracht wird und in für die Pulverherstellung üblichen Geräten gemischt wird.

6. Verwendung nach Anspruch 5, wobei man wäßrige Alkoholdispersionen einsetzt, die einen Alkoholgehalt im Bereich von 5 bis 50 Gew.-% - bezogen auf die gesamte Dispersion - aufweisen.

7. Verwendung nach Anspruch 5 oder 6, wobei man ein Gewichtsverhältnis Alkoholdispersion/Träger im Bereich von 20 : 80 bis 80 : 20 einstellt.

8. Verwendung nach einem der Ansprüche 1 bis 7, wobei man zur Herstellung der Additive solche festen Träger einsetzt, bei denen der Anteil der Teilchen mit einer Korngröße unterhalb von 1 mm mindestens 80 Gew.-% beträgt.

9. Verfahren zur Herstellung von Alkoholen in pulverförmiger Darreichungsform, **dadurch gekennzeichnet, daß** man einen festen Träger mit einer wäßrigen Dispersion von Alkoholen mit 8 bis 72 C-Atomen pro Molekül in Kontakt bringt und in für die Pulverherstellung üblichen Geräten mischt, wobei man die Träger auswählt aus der Gruppe der Kieselsäuren, Kieselgele, Aluminiumoxide, Aluminium-Silikate, Kaolin, Kreide, Mikrotalg, Bariumsulfat, Titanweiß und Zeolithe.

10. Verfahren nach Anspruch 9, wobei man wäßrige Alkoholdispersionen einsetzt, die einen Alkoholgehalt im Bereich von 5 bis 50 Gew.-% - bezogen auf die gesamte Dispersion - aufweisen.

11. Verfahren nach Anspruch 10 oder 11, wobei man ein Gewichtsverhältnis Alkoholdispersion/Träger im Bereich von 20 : 80 bis 80 : 20 einstellt.

12. Verfahren nach Anspruch 11, wobei man das Gewichtsverhältnis Alkoholdispersion/Träger auf einen Wert von etwa 70 : 30 einstellt.

13. Putze enthaltend Zuschläge, Bindemittel und Zusatzstoffe (Additive), **dadurch gekennzeichnet, daß** es sich bei den Additiven um Alkohole in pulverförmiger Darreichungsform handelt, wobei die Alkohole auf einen festen Träger aufgezogen sind 8 bis 72 C-Atome pro Molekül enthalten und wobei die Träger ausgewählt sind aus der Gruppe der Kieselsäuren, Kieselgele, Aluminiumoxide, Aluminium-Silikate, Kaolin, Kreide, Mikrotalg, Bariumsulfat, Titanweiß und Zeolithe.

14. Putze nach Anspruch 13, wobei die Additive in einer Menge - bezogen auf den gesamten Putz - im Bereich von 0,3 bis 2,0 Gew.-% enthalten sind.

15. Putze nach Anspruch 13 oder 14, wobei der Träger Kieselsäure ist.

16. Putze nach einem der Ansprüche 13 bis 15, wobei der Träger Fällungs-Kieselsäure ist.

17. Putze nach einem der Ansprüche 13 bis 16, wobei die Alkohole ausgewählt sind aus der Gruppe der Fettalkohole mit 8 bis 24 C-Atomen pro Molekül, der Guerbetalkohole mit 16 bis 24 C-Atomen pro Molekül, der Dimer- und/oder Trimeralkohole und der Oxoalkohole.

18. Mörtel, erhältlich durch Anrühren der Putze nach einem der Ansprüche 13 bis 17 mit Wasser.

## Claims

1. The use of alcohols as additives for plasters and/or mortars, **characterized in that** the additives are present in powder form, the alcohols being adsorbed onto a solid support and containing from 8 to 72 carbon atoms per molecule and the support being selected from the group consisting of silicas, silica gels, aluminium oxides, aluminium silicates, kaolin, chalk, microtalcum, barium sulfate, titanium white and zeolites.

2. The use claimed in claim 1, **characterized in that** the support is silica.

3. The use claimed in claim 1 or 2, **characterized in that** the support is precipitated silica.

4. The use claimed in any of claims 1 to 3, **characterized in that** the alcohols are selected from the group of fatty alcohols containing 8 to 24 carbon atoms per molecule, Guerbet alcohols containing 16 to 24 carbon atoms per molecule, dimer and/or trimer alcohols and oxoalcohols.

5. The use claimed in any of claims 1 to 4, **characterized in that**, in the production of the additives, the solid support is contacted with an aqueous dispersion of alcohols containing 8 to 72 carbon atoms per molecule and the dispersion and support are mixed in mixers of the type typically used for producing powders.

6. The use claimed in claim 5, **characterized in that** aqueous alcohol dispersions with an alcohol content of 5 to 50% by weight, based on the dispersion as a whole, are used.

7. The use claimed in claim 5 or 6, **characterized in that** a ratio by weight of alcohol dispersion to support of 20:80 to 80:20 is adjusted.

8. The use claimed in any of claims 1 to 7, **characterized in that** solid supports in which at least 80% by weight of the particles are smaller than 1 mm in size are used for the production of the additives.

9. A process for the production of alcohols in powder form, **characterized in that** a solid support is contacted with an aqueous dispersion of alcohols containing 8 to 72 carbon atoms per molecule and the support and the dispersion are mixed in mixers of the type typically used for producing powders the support being selected from the group consisting of silicas, silica gels, aluminium oxides, aluminium silicates, kaolin, chalk, microtalcum, barium sulfate, titanium white and zeolites.

10. A process as claimed in claim 9, **characterized in that** aqueous alcohol dispersions with an alcohol content of 5 to 50% by weight, based on the dispersion as a whole, are used.

11. A process as claimed in claim 10 or 11, **characterized in that** a ratio by weight of alcohol dispersion to support of 20:80 to 80:20 is adjusted.

12. A process as claimed in claim 11, **characterized in that** the ratio by weight of alcohol dispersion to support is adjusted to a value of about 70:30.

13. Plasters containing aggregates, binders and additives, **characterized in that** the additives are alcohols in powder form, the alcohols being adsorbed onto a solid support and containing 8 to 72 carbon atoms per molecule and the support being selected from the group consisting of silicas, silica gels, aluminium oxides, aluminium silicates, kaolin, chalk, microtalcum, barium sulfate, titanium white and zeolites.

14. Plasters as claimed in claim 13, **characterized in that** the additives are present in a quantity of 0.3 to 2.0% by weight, based on the plaster as a whole.

15. Plasters as claimed in claim 13 or 14, **characterized in that** the support is silica.

16. Plasters as claimed in any of claims 13 to 15, **characterized in that** the support is precipitated silica.

17. Plasters as claimed in any of claims 13 to 16, **characterized in that** the alcohols are selected from the group of fatty alcohols containing 8 to 24 carbon atoms per molecule, Guerbet alcohols containing 16 to 24 carbon atoms per molecule, dimer and/or trimer alcohols and oxoalcohols.

18. Mortars obtainable by stirring the plasters claimed in any of claims 13 to 17 with water.

## Revendications

1. Utilisation d'alcools en tant que substances d'addition (additifs) pour enduits et/ou mortiers,
**caractérisée en ce que**
les additifs se présentent sous une forme de présentation pulvérulente, dans laquelle les alcools sont appliqués sur un support solide et renferment de 8 à 72 atomes de carbone par molécule, et dont les supports sont choisis dans le groupe des acides siliciques, des gels de silice, des oxydes d'aluminium, des silicates d'aluminium, du kaolin, de la craie, du microsuif, du sulfate de baryum, du blanc de titane et des zéolithes.

2. Utilisation selon la revendication 1,
dans laquelle
le support est l'acide silicique.

3. Utilisation selon l'une quelconque des revendications 1 ou 2,
dans laquelle
le support est de l'acide silicique de précipitation.

4. Utilisation selon l'une quelconque des revendications 1 à 3,
dans laquelle
les alcools sont choisis dans le groupe des alcools gras ayant de 8 à 24 atomes de carbone par molécule, des alcools de Guerbet ayant de 16 à 24 atomes de carbone par molécule, des alcools dimêres et/ou trimères et des oxo-alcools.

5. Utilisation selon l'une quelconque des revendications 1 à 4,
dans laquelle
lors de la préparation d'additifs, le support solide est mis en contact avec une dispersion aqueuse d'alcools ayant de 8 à 72 atomes de carbone par molécule, et est mélangé dans des appareils usuels pour la production de poudres.

6. Utilisation selon la revendication 5,
dans laquelle
on met en oeuvre des dispersions aqueuses d'alcool qui possèdent une teneur en alcool dans la zone de 5 à 50 % en poids, rapporté à la dispersion totale.

7. Utilisation selon l'une quelconque des revendications 5 ou 6,
dans laquelle
on ajuste un rapport en poids de dispersion d'alcool/support dans la plage de 20:80 à 80:20.

8. Utilisation selon l'une quelconque des revendications 1 à 7,
dans laquelle
on met en oeuvre pour la préparation des additifs des supports solides dont la proportion de particules ayant une taille de grains en dessous de 1 mm, s'élève à au moins 80 % en poids.

9. Procédé de préparation d'alcools sous une forme de présentation pulvérulente,
**caractérisé en ce qu'**
on met en contact un support solide avec une dispersion aqueuse d'alcools ayant de 8 à 72 atomes de carbone par molécule on mélange dans des appareils usuels pour la production de poudres, dans lequel le support est choisi dans le groupe des acides siliciques, des gels de silice, des oxydes d'aluminium, des silicates d'aluminium, du kaolin, de la craie, du microsuif, du sulfate de baryum, du blanc de titane et des zéolithes.

10. Procédé selon la revendication 9,
dans lequel
on met en oeuvre des dispersions aqueuses d'alcool qui possèdent une teneur en alcool dans la plage de 5 à 50 % en poids, rapporté à la totalité de la dispersion.

11. Procédé selon l'une quelconque des revendications 9 ou 10,
dans lequel
on ajuste un rapport en poids de dispersion d'alcool/support à une valeur d'environ 20 : 80 à 80 : 20.

12. Procédé selon la revendication 11,
dans lequel
on ajuste le rapport en poids de dispersion d'alcool/support à une valeur d'environ 70:30.

13. Enduit contenant des suppléments, des agents liants et des additifs,
**caractérisé en ce qu'**
il s'agit en ce qui concerne les additifs, d'alcools sous forme de présentation pulvérulente, dans lesquels les alcools sont appliqués sur un support solide et contiennent de 8 à 72 atomes de carbone par molécule, et dont les supports sont choisis dans le groupe des acides siliciques, les gels de silice, des oxydes d'aluminium, des silicates d'aluminium, du Kaolin, du microsuif, du sulfate de baryum, du blanc de titane et des zéolithes.

14. Enduit selon la revendication 13,
dans lequel
les additifs sont contenus en une quantité rapporté au plâtre total, dans la zone de 0,3 à 2,0 % en poids.

15. Enduit selon l'une quelconque des revendications 13 ou 14,
dans lequel
le support est de l'acide silicique.

16. Enduit selon l'une quelconque des revendications 13 à 15,
dans lequel
le support est de l'acide silicique de précipitation.

17. Enduit selon l'une quelconque des revendications 13 à 16,
dans lequel
les alcools sont choisis dans le groupe des alcools gras ayant de 8 à 24 atomes de carbone par molécule, les alcools de Guerbet ayant de 16 à 24 atomes de carbone, les alcools dimères et/ou trimères et les oxo-alcools.

18. Mortier accessible par agitation de l'enduit selon l'une quelconque des revendications 13 à 17, avec de l'eau.
